# EUROPÄISCHE PATENTSCHRIFT

(11) **EP 1 360 097 B1**
(45) Veröffentlichungstag und Bekanntmachung des Hinweises auf die Patenterteilung: **15.10.2008**
(21) Anmeldenummer: 02712734.9
(22) Anmeldetag: 01.02.2002
(51) Int. Cl.: B60T 8/36

(54) **HYDRAULIKAGGREGAT FUR SCHLUPFGEREGELTE KRAFTFAHRZEUGBREMSANLAGEN SOWIE SEIN HERSTELLUNGSVERFAHREN**
HYDRAULIC UNIT FOR ANTI-LOCK AUTOMOTIVE BRAKE SYSTEMS AND METHOD FOR PRODUCING THE SAME
UNITE HYDRAULIQUE POUR SYSTEMES DE FREINAGE A ANTIPATINAGE DE VEHICULES AUTOMOBILES ET SON PROCEDE DE FABRICATION

(30) Priorität: 03.02.2001 DE 10104875
(43) Veröffentlichungstag der Anmeldung: 12.11.2003
(73) Patentinhaber: ROBERT BOSCH GMBH, 70442 Stuttgart (DE)
(72) Erfinder: JOCHAM, Reinhold, 72379 Hechingen (DE)
(86) Internationale Anmeldenummer: PCT/DE2002/000368
(87) Internationale Veröffentlichungsnummer: WO 2002/062641

(56) Entgegenhaltungen:
- DE-A- 19 529 550
- DE-A- 19 535 235
- DE-A- 19 640 261
- DE-A- 19 704 152
- DE-A- 19 859 488
- US-A- 5 887 624

## Beschreibung

### Stand der Technik

Die Erfindung geht aus von einem Hydraulikaggregat für schlupfgeregelte Bremsanlagen von Kraftfahrzeugen gemäß dem Oberbegriff des Anspruchs 1 sowie von einem Verfahren zu dessen Herstellung gemäß dem Oberbegriff von Anspruch 9.

Ein solches Hydraulikaggregat ist aus der EP 0 720 551 B1 bekannt und weist einen Ventilblock mit Aufnahmebohrungen für je einen hydraulischen Teil elektromagnetisch betätigter Ventile auf, welche je einen magnetisch wirksame Elemente wie Anker und Magnetkern des hydraulischen Teils enthaltenden Ventildom beinhalten, der in Verlängerung der Aufnahmebohrung über eine Begrenzungsebene, des Ventilblocks ragt. Die Ventile haben zudem je einen elektrischen Teil, der auf den Ventildom aufgesteckt ist und eine diesen umschließende, elektrische Spule, ein Spulengehäuse sowie eine im Spulengehäuse auf der der Begrenzungsebene zugewandten Seite aufgenommene Ringscheibe aufweist. Der elektrische Teil wird unter anderem durch Aufstecken der Ringscheibe auf eine in der Aufnahmebohrung verstemmte Buchse gegenüber dem hydraulischen Teil des Ventils zentriert. Meist werden sechs oder zwölf Spulen je Hydraulikaggregat verwendet, wobei zur Montage des elektrischen Teils der Ventile die Ringscheiben für jede Spule einzeln in eine Bodenöffnung des zugeordneten Spulengehäuses eingepresst werden und das Spulengehäuse zusammen mit der Spule von oben über den Ventildom geschoben wird, bis die Ringscheibe mit der Buchse in Eingriff kommt.

### Vorteile der Erfindung

Aufgrund von Ringscheiben, die im wesentlichen in einer Ebene nebeneinander angeordnet sind und durch Stege untereinander in Verbindung stehen, werden bei der Montage des erfindungsgemäßen Hydraulikaggregats zuerst die Spulen tragenden Spulengehäuse auf die zugeordneten Ringscheiben gesetzt und anschließend die hierdurch zusammengefassten elektrischen Antriebe aller dem Hydraulikaggregat zugehörigen Ventile als Baueinheit auf den Ventilblock montiert Gegenüber der bisherigen Vorgehensweise hat dies den Vorteil kürzerer Fertigungszeit durch Zusammenfassen gleichartiger Fertigungsschritte.

Durch die in den Unteransprüchen aufgeführten Maßnahmen sind vorteilhafte Weiterbildungen und Verbesserungen der Erfindung möglich.

Eine besonders zu bevorzugende Weiterbildung der Erfindung sieht vor, dass die Stege im Montagezustand an den Spulengehäusen stirnseitig ausgebildete, radiale Nuten derart durchragen, dass dem hydraulischen Teil der Ventile zugewandte Stirnflächen der Ringscheiben mit der Stirnfläche des zugeordneten Spulengehäuses fluchten. Dann bildet die Bodenfläche des die Spulengehäuse tragenden Ringscheibenverbandes eine ebene Fläche, welche auf der ebenfalls ebenen Oberfläche des Ventilblocks plan zur Anlage kommen kann, wodurch sich ein verbesserter Magnetfluss ergibt.

Eine weitere bevorzugte Maßnahme sieht vor, dass zumindest einige der Stege elastisch und/oder plastisch verformbar ausgebildet sind. Dann kann ein Toleranzausgleich für eventuell abweichend von der Senkrechten in den Ventilblock eingebaute Ventildome dadurch erfolgen, dass sich die Ringscheiben gegeneinander winkelig ausrichten.

Gemäß einer Weiterbildung weisen zumindest einige der Stege Befestigungselemente wie Schraubösen oder Anschlagflächen für Niederhalter oder Rippen auf, welche von einem am Ventilblock befestigbaren Steuergerätegehäuse zur Fixierung des Ringscheibenverbandes wegragen.

### Zeichnungen

Ein Ausführungsbeispiel der Erfindung ist in der Zeichnung dargestellt und in der nachfolgenden Beschreibung näher erläutert. In den Zeichnungen zeigt:
Fig.1 einen Längsschnitt durch ein stromlos geschlossenes, elektromagnetisch betätigtes Ventil des erfindungsgemäßen Hydraulikaggregats in bevorzugter Ausführungsform;
Fig.2 eine schematische Darstellung eines Ringescheibenverbandes mit einem Spulengehäuse des Ventils von Fig.1 kurz vor der Montage.

### Beschreibung des Ausführungsbeispiels

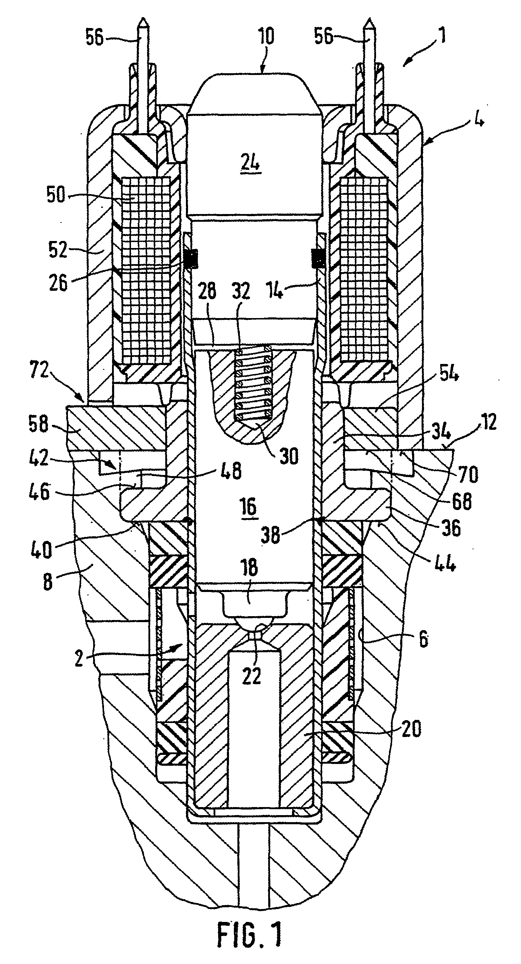

Von einem Hydraulikaggregat für schlupfgeregelte Bremsanlagen von Kraftfahrzeugen ist in Fig.1 aus Maßstabsgründen nur ein elektromagnetisch betätigtes Ventil 1 von insgesamt zwölf Ventilen dargestellt, bestehend aus einem hydraulischen Teil 2 und einem elektrischen Teil 4. Der hydraulische Teil 2 ist in einer gestuften Aufnahmebohrung 6 eines Ventilblocks 8 aufgenommen und dort befestigt. In Verlängerung der Aufnahmebohrung 6 überragt der hydraulische Teil 2 mit einem Ventildom 10 eine Begrenzungsebene 12 des Ventilblocks 8. Auf den Ventildom 10 ist der elektrische Teil 4 aufgesteckt.

Der hydraulische Teil 2 beinhaltet eine dünnwandige, zylindrische Führungshülse 14, innerhalb welcher ein in axialer Richtung beweglicher Anker 16 mit einem Schließglied 18 geführt ist. Bodenseitig ist in der Führungshülse 14 ein Ventilkörper 20 mit Preßsitz aufgenommen, der mit einem Ventilsitz 22 für das Schließglied 18 versehen ist. Im gegenüberliegenden Ende der Führungshülse 14 ist ein Magnetkern 24 durch Schweißung 26 befestigt, der zum Anker 16 hin einen schmalen Luftspalt 28 freiläßt, In einer Sackbohrung 30 des Ankers 16 ist eine sich am Magnetkern 24 abstützende Schließfeder 32 aufgenommen.

Auf dem mittleren Teil der Führungshülse 14 sitzt eine Buchse 34 aus weichmagnetischem Werkstoff mit einem Flansch 36 und ist dort beispielsweise durch Schweißung 38 befestigt, wobei der Flansch 36 in einer Bohrungsstufe 40 der Aufnahmebohrung 6 durch eine Verstemmung 42 gehalten ist. Eine bodenseitige Stirnfläche 44 des Flansches 36 liegt am Grund der Bohrungsstufe 40 an, während die andere Stirnfläche 46 durch einen Werkstoffwulst 48 überdeckt ist, der durch den vom Bohrungsrand verdrängten Werkstoff entstanden ist. Die Verstemmung 42 sichert die Lage des hydraulischen Teils 2 des Ventils 1 im Ventilblock 8.

Der elektrische Teil 4 des Ventils 1 wird nach dem Befestigen des hydraulischen Teils 2 im Ventilblock 8 auf den Ventildom 10 aufgesteckt und weist eine elektrische Spule 50 auf, welche den Ventildom 10 im Bereich des Magnetkerns 24 umschließt. Die Spule 50 ist in einem Spulengehäuse 52 aufgenommen, in welches bodenseitig eine aus weichmagnetischem Werkstoff bestehende Ringscheibe 54 eingepreßt ist. Anschlußstifte 56 der Spule 50 ragen durch die Kopfwand des Spulengehäuses 52 senkrecht nach oben. Das Spulengehäuse 52 umgreift vorzugsweise spielfrei den Magnetkern 24 und mit der Ringscheibe 54 die Buchse 34 des hydraulischen Teils 2 und wird hierdurch an diesem zentriert.

Bei stromloser Spule 50 hält die Schließfeder 32 das Schließglied 18 am Ventilsitz 22 anliegend. Bei erregter elektrischer Spule 50 trägt die Buchse 34 ebenso wie der Magnetkern 24 und das Spulengehäuse 52 zum Leiten des Magnetflußes auf den Anker 16 des hydraulischen Teils 2 bei. Der magnetisch wirksame Magnetkern 24 erzeugt dann Magnetkräfte, welche den axial beweglichen Anker 16 in die Offenstellung des Ventils 1 drängen.

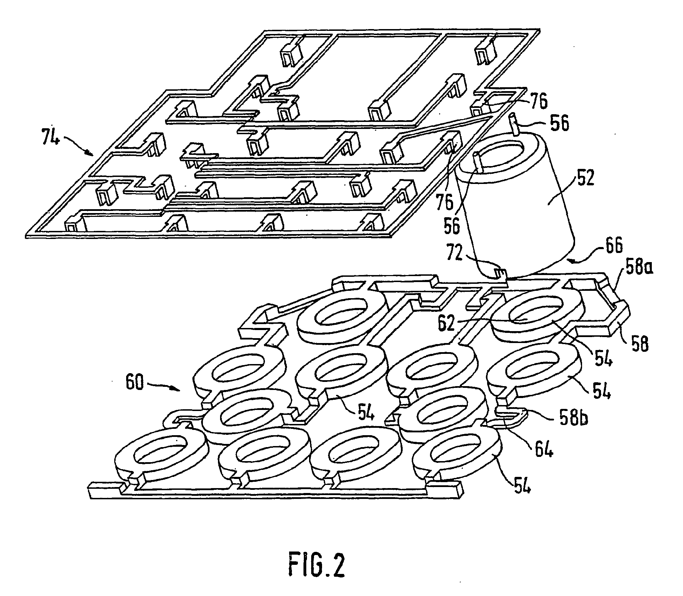

In Fig.2 ist das Spulengehäuse 52 des Ventils 1 in einem Stadium kurz vor der Montage auf der zugeordneten Ringscheibe 54 gezeigt. Jedem der zwölf Ventile 1 des Hydraulikaggregats ist eine solche Ringscheibe 54 zugeordnet, wobei die Ringscheiben 54 im wesentlichen in einer Ebene nebeneinander angeordnet und durch Stege 58 untereinander verbunden sind. Die Stege 58 und die Ringscheiben 54 bilden dann zusammen einen vorzugsweise einstückigen, ebenen Ringscheibenverband 60, welcher beispielsweise durch ein Blechstanzteil gebildet wird und in welchem jede Ringscheibe 54 durch mindestens einen Steg 58 mit einer weiteren Ringscheibe 54 verbunden ist. Die Lage der einzelnen Ringscheiben 54 innerhalb des Ringscheibenverbandes 60 ist so gewählt, daß zentrale Durchgangsöffnungen 62 der Ringscheiben 64 mit den zugeordneten, aus dem Ventilblock 8 ragenden Ventildomen 10 axial fluchten können.

Die Dicke der Stege 58 ist vorzugsweise identisch mit der Dicke der Ringscheiben 54. Zumindest einige der Stege 58a können elastisch und/oder plastisch verformbar ausgebildet sein, um einen Toleranzausgleich für eventuell abweichend von der Senkrechten in den Ventilblock 8 eingestemmte Ventildome 10 zur Verfügung zu stellen. Diese Stege 58 a weisen dann beispielsweise gegenüber den Ringscheiben 54 einen einseitig reduzierten Querschnitt auf. Zusätzlich können zumindest einige der Stege 58b mit Befestigungselementen wie Schraubösen 64 versehen sein, um den Ringscheibenverband 60 am Ventilblock 8 zu befestigen. Alternativ oder zusätzlich können an den Stegen Anschlagflächen für Niederhalter oder Rippen vorgesehen sein, welche von einem nicht dargestellten Steuergerätgehäuse nach unten ragen, um den Ringscheibenverband 60 in seiner Einbaulage zu fixieren.

Wenn der hydraulische Teil 2 der Ventile 1 bereits in der zugeordneten Aufnahmebohrung 6 verstemmt ist, werden die Spu lengehäuse 52 samt Spulen 50 mit ihren Bodenöffnungen 66 nacheinander auf die zugeordneten Ringscheiben 54 des Ringscheibenverbandes 60 gepreßt, bis jeweils eine dem hydraulischen Teil 2 des Ventils 1 zugewandte Stirnfläche 68 jeder Ringscheibe 54 mit der Stirnfläche 70 des zugeordneten Spulengehäuses 52 fluchtet, so daß der Ringscheibenverband 60 eine ebene Bodenfläche aufweist. Um dies zu ermöglichen, sind an den Spulengehäusen 52 stirnseitig radiale Nuten 72 ausgespart, deren Querschnitt im wesentlichen dem der Stege 58 im Bereich der jeweiligen Ringscheibe 54 entspricht und welche von den Stegen 58 radial durchragt werden, wie auch Fig.1 zeigt. Als Montageergebnis erhält man eine Baueinheit aus auf dem Ringscheibenverband 60 gehaltener elektrischer Teile 4 sämtlicher Ventile 1 des Hydraulikaggregats.

In einem weiteren Schritt wird diese Baueinheit unter Einführen der aus dem Ventilblock 8 ragenden Ventildome 10 in die Durchgangsöffnungen 62 der zugeordneten Ringscheiben 54 von oben auf den Ventilblock 8 gesetzt, wobei die Ringscheiben 54 die zugeordneten, in den Aufnahmebohrungen 6 verstemmten Buchsen 34 vorzugsweise mit Preßsitz umgreifen und der Ringscheibenverband 60 mit seiner ebenen Bodenfläche auf der Begrenzungsebene 12 des Ventilblocks 8 zur Anlage kommt, wie in Fig.1 gezeigt ist.

Zur gemeinsamen Stromversorgung der Spulen 50 ist vorzugsweise ein elektrisches, an eine Stromquelle anschließbares Leitergitter 74 aus Blech vorgesehen, das auf die Anschlußstifte 56 der Spulen 50 aufsetzbar ausgebildet ist. Hierzu sind an den den Anschlußstiften 56 gegenüberliegenden Stellen des Leitergitters 74 zu den Anschlußstiften 56 hin offene Schuhe 76 mit U-förmigem Querschnitt vorhanden, welche die Anschlußstifte 56 übergreifen und an ihnen angeschweißt sind. Alternativ können die einzelnen Anschlußstifte 56 auch durch Steckverbinder untereinander und mit einer Stromquelle verbunden sein. Die montierte Baueinheit aus Ringscheibenverband 60 und Spulengehäusen 52 wird durch ein nicht dargestelltes Steuergerätgehäuse übergriffen, welches am Ventilblock 8 befestigbar ist. Vom Steuergerätgehäuse können Rippen oder Niederhalter in Richtung Ringscheibenverband 60 ragen, welche von oben Druck auf einige der Stege 58 ausüben und somit den Ringscheibenverband 60 zusammen mit den Spulengehäusen 52 in Position halten.

## Patentansprüche

1. Hydraulikaggregat für schlupfgeregelte Bremsanlagen von Kraftfahrzeugen mit einem Ventilblock (8) mit Aufnahmebohrungen (6) für je einen hydraulischen Teil (2) elektromagnetisch betätigter Ventile (1), welche je einen magnetisch wirksame Elemente wie Anker (16) und Magnetkern (24) des hydraulischen Teils (2) enthaltenden Ventildom (10) beinhalten und je einen elektrischen Teil (4), der auf den Ventildom (10) aufgesteckt ist und eine diesen umschließende, elektrische Spule (50), ein Spulengehäuse (52) sowie eine im Spulengehäuse (52) auf der am hydraulischen Teil (2) zugewandten Seite wenigstens mittelbar aufgenommene Ringscheibe (54) aufweist, **dadurch gekennzeichnet, dass** die Ringscheiben (54) wenigstens einiger Ventile (1) miteinander zu einem Ringscheibenverband (60) verbunden sind, wobei die Ringscheiben (54) im Wesentlichen in einer Ebene nebeneinander angeordnet sind und durch Stege (58, 58a, 58b) untereinander in Verbindung stehen.

2. Hydraulikaggregat nach Anspruch 1, **dadurch gekennzeichnet, dass** die Stege (58, 58a, 58b) im Montagezustand an den Spulengehäusen (52) stirnseitig ausgebildete, radiale Nuten (72) derart durchragen, dass dem hydraulischen Teil (2) der Ventile (1) zugewandte Stirnflächen (68) der Ringscheiben (54) mit der Stirnfläche (70) des zugeordneten Spulengehäuses (52) fluchten.

3. Hydraulikaggregat nach Anspruch 2, **dadurch gekennzeichnet, daß** jede Ringscheibe (54) durch mindestens einen Steg (58, 58a, 58b) mit einer weiteren Ringscheibe (54) verbunden ist.

4. Hydraulikaggregat nach Anspruch 2 oder 3, **dadurch gekennzeichnet, daß** die Ringscheiben (54) und Stege (58, 58a, 58b) einen vorzugsweise einstückigen Ringscheibenverband (60) bilden.

5. Hydraulikaggregat nach einem der Ansprüche 2 bis 4, **dadurch gekennzeichnet, daß** zumindest einige der Stege (58a) elastisch und/oder plastisch verformbar ausgebildet sind.

6. Hydraulikaggregat nach einem der Ansprüche 2 bis 5, **dadurch gekennzeichnet, daß** zumindest einige der Stege (58b) Befestigungselemente wie Schraubösen (64) oder Anschlagflächen für Niederhalter oder Rippen aufweisen, welche von einem am Ventilblock (8) befestigbaren Steuergerätgehäuse zur Fixierung des Ringscheibenverbandes (60) weg ragen.

7. Hydraulikaggregat nach einem der vorhergehenden Ansprüche, **dadurch gekennzeichnet, daß** ein gemeinsames elektrisches Leitergitter (74) vorgesehen ist, das auf der vom Ventilblock (8) abgewandten Stirnseite der Spulengehäuse (52) angeordnete Anschlußstifte (56) der Ventile (1) aufsetzbar ist.

8. Hydraulikaggregat nach Anspruch 7, **dadurch gekennzeichnet, daß** das elektrische Leitergitter (74) mit zu den Anschlußstiften (56) hin offenen Schuhen (76) versehen ist, in welche die Anschlußstifte (56) einschweißbar sind.

9. Verfahren zum Herstellen eines Hydraulikaggregats nach einem der Ansprüche 1 bis 8, **gekennzeichnet durch** folgende Schritte :
- Einsetzen des hydraulischen Teils (2) der Ventile (1) in die Aufnahmebohrungen (6) des Ventilblocks (8),
- Bilden einer jeweils den elektrischen Teil (4) wenigstens einiger Ventile (1) tragenden Baueinheit **durch** Verbinden der Spulengehäuse (52) mit den zugeordneten Ringscheiben (54) des Ringscheibenverbandes (60), und
- Aufsetzen der Baueinheit auf den Ventilblock (8) unter Einführen der Ventildome (10) in Durchgangsöffnungen (62) der Ringscheiben (54) des Ringscheibenverbandes (60).

## Claims

1. Hydraulic unit for anti-lock automotive brake systems, having a valve block (8) with receiving bores (6) for in each case one hydraulic part (2) of electromagnetically actuated valves (1), which valves (1) comprise in each case one valve dome (10), which contains magnetically active elements such as an armature (16) and magnet core (24) of the hydraulic part (2), and in each case one electrical part (4) which is plugged onto the valve dome (10) and which has an electrical coil (50) surrounding said valve dome (10), a coil housing (52) and an annular disc (54) which is held at least indirectly in the coil housing (52) on that side which faces toward the hydraulic part (2), **characterized in that** the annular discs (54) of at least some valves (1) are connected to one another to form an annular disc assembly (60), with the annular discs (54) being arranged adjacent to one another substantially in a plane, and being connected to one another by means of webs (58, 58a, 58b).

2. Hydraulic unit according to Claim 1, **characterized in that**, in the assembled state, the webs (58, 58a, 58b) extend through radial grooves (72) which are formed on the coil housings (52) on the end side, in such a way that end faces (68), which face toward the hydraulic part (2) of the valves (1), of the annular discs (54) are aligned with the end face (70) of the associated coil housing (52).

3. Hydraulic unit according to Claim 2, **characterized in that** each annular disc (54) is connected by means of at least one web (58, 58a, 58b) to a further annular disc (54).

4. Hydraulic unit according to Claim 2 or 3, **characterized in that** the annular discs (54) and webs (58, 58a, 58b) form a preferably single-piece annular disc assembly (60).

5. Hydraulic unit according to one of Claims 2 to 4, **characterized in that** at least some of the webs (58a) are formed so as to be elastically and/or plastically deformable.

6. Hydraulic unit according to one of Claims 2 to 5, **characterized in that** at least some of the webs (58b) have fastening elements such as screw eyes (64) or stop surfaces for retainers or fins which project away from a control unit housing, which can be fixed to the valve block (8), for fixing the annular disc assembly (60).

7. Hydraulic unit according to one of the preceding claims, **characterized in that** a common electrical conductor grid (74) is provided which can be placed onto connecting pins (56), which are arranged on that end side of the coil housing (52) which faces away from the valve block (8), of the valves (1).

8. Hydraulic unit according to Claim 7, **characterized in that** the electrical conductor grid (74) is provided with shoes (76) which are open in the direction of the connecting pins (56) and into which the connecting pins (56) can be welded.

9. Method for producing a hydraulic unit according to one of Claims 1 to 8, **characterized by** the following steps:
- inserting the hydraulic part (2) of the valves (1) into the receiving bores (6) of the valve block (8),
- forming a module, which supports in each case the electrical part (4) of at least some valves (1), by connecting the coil housing (52) to the associated annular discs (54) of the annular disc assembly (60), and
- placing the module onto the valve block (8), inserting the valve domes (10) into passage openings (62) of the annular discs (54) of the annular disc assembly (60).

## Revendications

1. Unité hydraulique pour des systèmes de freinage à régulation anti-patinage comportant un bloc de soupapes (8) muni de perçages de réception (6) pour la partie hydraulique (2) respective de soupapes à commande électromagnétique (1), comportant chacune un dôme de soupape (10) recevant des éléments axiaux magnétiques tels que l'induit (16) et le noyau magnétique (24) de la partie hydraulique (2) et chaque fois une partie électrique (4) engagée sur le dôme de soupape (10) et une bobine électrique (50) entourant celui-ci, l'unité hydraulique comportant en outre un boîtier de bobine (52) et une rondelle annulaire (54) logée au moins indirectement dans le boîtier de bobine (52) sur le côté tourné vers la partie hydraulique (2),
**caractérisée en ce que**
les rondelles (54) d'au moins certaines soupapes (10) sont reliées les unes aux autres pour former un ensemble de rondelles (60) et les rondelles (54) sont juxtaposées pratiquement dans un plan en étant reliées les unes aux autres par des entretoises (58, 58a, 58b).

2. Unité hydraulique selon la revendication 1,
**caractérisée en ce que**
les entretoises (58, 58a, 58b) traversent à l'état monté des découpes (72), radiales, réalisées du côté frontal dans les boîtiers de bobine (52) de façon que des surfaces frontales (68) des rondelles annulaires (54) tournées vers la partie hydraulique (2) des soupapes (1) soient alignées avec la surface frontale (70) du boîtier de bobine (52) correspondant.

3. Unité hydraulique selon la revendication 2,
**caractérisée en ce que**
chaque rondelle annulaire (54) est reliée à une autre rondelle annulaire (54) par au moins une entretoise (58, 58a, 58b).

4. Unité hydraulique selon les revendications 2 ou 3,
**caractérisée en ce que**
les rondelles annulaires (54) et les entretoises (58, 58a, 58b) constituent de préférence un ensemble de rondelles (60) en une seule pièce.

5. Unité hydraulique selon l'une des revendications 2 à 4,
**caractérisée en ce qu'**
au moins certaines des entretoises (58a) sont déformables de manière élastique et/ou plastique.

6. Unité hydraulique selon l'une des revendications 2 à 4,
**caractérisée en ce qu'**
au moins certaines des entretoises (58b) comportent des éléments de fixation tels que des orifices à vis (64) ou des surfaces de butée pour des serre-flans ou des nervures, venant en saillie d'un boîtier d'appareil de commande qui se fixe sur un bloc de soupape (8) pour bloquer l'ensemble de rondelles annulaires (60).

7. Unité hydraulique selon l'une des revendications précédentes,
**caractérisée par**
une grille électro-conductrice (74) commune, appliquée sur les broches de branchement (56) prévues sur la face frontale du boîtier de bobine (52) non tournée vers le bloc de soupape (8).

8. Unité hydraulique selon la revendication 7,
**caractérisée en ce que**
la grille électro-conductrice (74) est munie de patins (76) ouverts en direction des broches de branchement (56) et dans lesquels sont soudées les broches de branchement (56).

9. Procédé de fabrication d'une unité hydraulique selon l'une des revendications 1 à 8,
**caractérisée par** les étapes suivantes :
- mise en place de la partie hydraulique (2) des soupapes (1) dans les perçages de réception (6) du bloc de soupapes (8),
- formation d'un ensemble qui porte respectivement la partie électrique (4) d'au moins certaines soupapes (1) en reliant les boîtiers de bobine (52) à des rondelles annulaires (54) correspondantes de l'ensemble de rondelles annulaires (60), et
- mise en place de l'ensemble sur le bloc de soupapes (8) en introduisant les dômes de soupape (10) dans les orifices traversants (62) des rondelles annulaires (54) de l'ensemble de rondelles annulaires (60).
